# FASCICULE DE BREVET EUROPEEN

(11) **EP 2 747 935 B1**
(45) Date de publication et mention de la délivrance du brevet: **11.04.2018**
(21) Numéro de dépôt: 12758571.9
(22) Date de dépôt: 20.08.2012
(51) Int. Cl.: B23K 37/04, B23P 15/04, B25B 5/14, F01D 5/18, B23Q 3/06, B23K 1/00, B23K 31/02

(54) **OUTILLAGE DE PRISE DE PIECE DE TURBOMACHINE COMPRENANT DES MOYENS DE FIXATION ET D'IMMOBILISATION DE LA PIECE ET D'UN ELEMENT A FIXER PAR BRASAGE OU PAR SOUDAGE SUR LADITE PIECE**
WERKZEUG ZUM HALTEN EINES TURBINENMOTORTEILS MIT EINEM MITTEL ZUR BEFESTIGUNG UND IMMOBILISIERUNG DES TEILS SOWIE EINEM ELEMENT ZUR BEFESTIGUNG AN DIESEM TEIL DURCH HARTLÖTEN ODER SCHWEISSEN
TOOL FOR HOLDING A TURBINE-ENGINE PART, INCLUDING A MEANS FOR ATTACHING AND IMMOBILISING THE PART AND AN ELEMENT TO BE ATTACHED TO SAID PART BY BRAZING OR WELDING

(30) Priorité: 24.08.2011 FR 1157490
(43) Date de publication de la demande: 02.07.2014
(73) Titulaire: SNECMA, 75015 Paris (FR)
(72) Inventeur: JEHN, Christophe, 77550 Moissy Cramayel Cedex (FR); NARA, Sandra, 77550 Moissy Cramayel Cedex (FR); CARLIN, Maxime, François, Roger, 77550 Moissy Cramayel Cedex (FR); BOISARD, Didier, Christian, 77550 Moissy Cramayel Cedex (FR)
(74) Mandataire: Pichat, Thierry
(86) Numéro de dépôt international: PCT/FR2012/051912
(87) Numéro de publication internationale: WO 2013/026984

(56) Documents cités:
- JP-A- 3 194 102
- US-A- 2 767 460
- US-A1- 2004 151 580
- US-A1- 2005 199 678

## Description

La présente invention concerne un outillage de prise de pièce de turbomachine, pour la fixation par exemple par soudage ou brasage d'un élément métallique sur cette pièce, ainsi qu'un procédé de fixation d'un élément métallique sur une pièce de turbomachine au moyen de cet outillage conformément au préambule des revendications 1 et 8 (voir, par exemple US2004/151580).

La présente invention est particulièrement mais non exclusivement adaptée à la fixation par soudage ou brasage d'un élément métallique tel qu'une plaquette ou une pastille sur une aube à cavité d'une turbine de turbomachine.

Une aube de ce type comprend une pale raccordée par une plate-forme à un pied du type en queue d'aronde, en sapin ou analogue, destiné à être inséré dans une rainure de forme complémentaire d'un disque de rotor de la turbine.

L'aube comprend des canaux internes de circulation d'air de refroidissement, formés lors de la fabrication de l'aube par fonderie au moyen d'un noyau céramique autour duquel est coulé un alliage métallique en fusion. Ce noyau traverse une surface plane radialement interne du pied d'aube. Après refroidissement du matériau de coulée, le noyau céramique est retiré ou éliminé (par exemple par dissolution chimique), ce qui laisse libres des ouvertures sur la surface précitée du pied d'aube. Ces ouvertures communiquent avec les canaux internes de l'aube et peuvent servir à leur alimentation en air de refroidissement. Cependant, elles ont des formes et des dimensions variables qui ne permettent pas d'optimiser le débit d'air circulant dans les canaux de l'aube.

On a déjà proposé de fixer des plaquettes ou des pastilles de calibration sur ces surfaces des pieds d'aubes pour limiter et contrôler les débits d'air de refroidissement des aubes à travers les ouvertures précitées.

Les pastilles ont une forme générale circulaire et sont destinées à recouvrir une ouverture précitée d'une surface de pied d'aube pour l'obturer et empêcher ainsi l'air de passer dans les canaux de l'aube à travers cette ouverture. Deux pastilles ou plus peuvent être fixées sur la surface précitée d'un pied d'aube.

Les plaquettes ont chacune une forme générale parallélépipédique destinée à recouvrir la quasi-totalité de la surface d'un pied d'aube et comportent des orifices calibrés, c'est-à-dire ayant chacun une forme et des dimensions précises, qui communiquent chacun avec une des ouvertures de la surface du pied d'aube. Certaines des ouvertures de cette surface sont bouchées par la plaquette, et les autres communiquent avec les orifices calibrés de la plaquette.

Dans la technique actuelle, chaque plaquette ou pastille est fixée par brasage sur la surface précitée du pied d'aube, cette opération de brasage consistant pour l'essentiel à déposer un métal d'apport entre la plaquette ou la pastille et la surface du pied d'aube, puis à placer l'ensemble dans un four porté à une température suffisante pour provoquer la fusion du métal d'apport.

L'étape de brasage est précédée d'une étape de pointage de la plaquette ou pastille, ce pointage étant réalisé manuellement par décharge d'un condensateur électrique et permettant d'immobiliser la plaquette ou pastille sur la surface du pied d'aube.

Pendant ces étapes de pointage et de brasage, l'aube doit être maintenue immobile, car un déplacement de l'aube pourrait entraîner un mauvais positionnement de l'aube vis-à-vis de l'élément à fixer et risquerait d'endommager l'aube. De la même façon, la plaquette ou la pastille doit être positionnée et maintenue immobile sur la surface de la pièce pendant l'étape de pointage pour éviter qu'elle ne se déplace sur la surface et/ou s'écarte de cette surface.

Dans la technique actuelle, les moyens utilisés pour immobiliser l'aube et pour positionner un élément métallique sur le pied d'aube ne permettent pas d'assurer un positionnement précis de l'élément sur l'aube ni une immobilisation de cet élément vis-à-vis de l'aube. Ils ne permettent donc pas de fixer des éléments métalliques sur des pieds d'aubes avec de bonnes répétabilité et fiabilité. De nombreuses aubes sont mises au rébus à cause des mauvaises fixations et des mauvais positionnements des éléments sur les pieds de ces aubes, ce qui représente une perte financière importante.

L'invention a notamment pour but de proposer une solution simple, efficace et économique à ce problème.
Elle propose à cet effet un outillage de prise de pièce de turbomachine pour la fixation d'un élément métallique sur cette pièce tel que défini dans la revendication 1, et comprenant donc des premiers moyens de fixation et d'immobilisation de la pièce et des seconds moyens de positionnement et d'immobilisation de l'élément sur une surface de la pièce, caractérisé en ce que lesdits seconds moyens sont amovibles et comprennent un gabarit destiné à être monté sur une partie de la pièce et comportant une lumière de réception de l'élément, au moins une partie du bord périphérique de la lumière du gabarit coopérant avec l'élément pour son positionnement sur la surface de la pièce, ce bord périphérique comportant au moins une encoche de passage d'un moyen de fixation par pointage de l'élément sur la surface, les seconds moyens comprenant également des moyens d'appui sur l'élément pour le maintenir contre la surface de la pièce.
Les moyens d'appui comprenant des lames ou des doigts élastiquement déformables dont une extrémité est en appui sur l'élément et dont l'autre extrémité est montée et fixée sur lesdits premiers moyens de fixation de la pièce, le gabarit comportant des moyens formant butée destinés à coopérer avec la pièce pour immobiliser le gabarit sur la pièce, et/ou des moyens de détrompage destinés à empêcher un mauvais montage du gabarit sur la pièce.
Les moyens d'appui sur l'élément sont destinés à maintenir l'élément contre la surface de la pièce pour l'empêcher de se décoller et de s'écarter de la surface lors du pointage.

Le gabarit de l'outillage selon l'invention permet de positionner avec une grande précision l'élément métallique sur la surface de la pièce, qui est par exemple une aube de rotor de turbine. Ce gabarit comprend une lumière traversante dont la forme correspond à celle de l'élément. Dans le cas où une plaquette rectangulaire doit être fixée sur un pied d'aube, la lumière du gabarit a une forme générale rectangulaire dont les dimensions sont de préférence sensiblement égales voire légèrement supérieures à celles de la plaquette. Dans le cas où une pastille circulaire doit être fixée sur le pied d'aube, la lumière du gabarit a une forme générale circulaire dont le diamètre est de préférence sensiblement égal voire légèrement supérieur à celui de la pastille. Lorsque l'élément est engagé dans la lumière du gabarit, il est de préférence en appui par ses bords périphériques sur le bord périphérique de la lumière, pour éviter tout déplacement de l'élément sur la surface de la pièce.

Le bord périphérique de la lumière du gabarit comporte au moins une encoche de passage d'un moyen de fixation, tel qu'un faisceau laser, pour le pointage de l'élément sur la pièce. Le faisceau laser est destiné à passer à travers la ou chaque encoche pour former un point de soudure entre le bord périphérique de l'élément et la surface de la pièce. Le bord périphérique de la lumière du gabarit peut comprendre au moins trois encoches espacées les unes des autres. Chaque encoche peut avoir une forme en demi-cercle.

Le gabarit peut comporter deux lumières destinées à recevoir chacune un élément métallique à fixer sur la surface de la pièce.

Lesdits premiers moyens peuvent permettre de fixer et d'immobiliser simultanément au moins deux pièces de même type, et comporter des mors comportant une partie centrale fixe et des parties latérales mobiles en translation par rapport à la partie centrale, chaque pièce étant destinée à être montée entre une mâchoire de la partie fixe et une mâchoire de l'une des parties latérales.

Les moyens d'appui sur un élément destiné à être fixé sur l'une des pièces et les moyens d'appui sur un autre élément destiné à être fixé sur une autre pièce, sont de préférence solidaires d'un organe commun fixé de manière amovible sur la partie centrale desdits premiers moyens.

La présente invention concerne également un procédé de fixation d'un élément métallique sur une pièce de turbomachine, au moyen de l'outillage de prise de pièce décrit ci-dessus, ceci tel que défini dans la revendication 8, le procédé de fixation comprenant les étapes consistant à :
- immobiliser au moins une pièce grâce aux premiers moyens,
- monter le gabarit sur la pièce et engager l'élément dans la lumière du gabarit pour le positionner sur la surface de la pièce,
- maintenir l'élément en appui sur la pièce grâce aux moyens d'appui,
- fixer l'élément sur la surface de la pièce par pointage laser au niveau de ses bords périphériques, à travers les encoches précitées du gabarit,
- retirer les moyens d'appui et le gabarit, et
- former un cordon de soudure ou de brasure sur tout le pourtour de l'élément.

L'invention sera mieux comprise et d'autres caractéristiques, détails et avantages de celle-ci apparaîtront plus clairement à la lecture de la description qui suit, faite à titre d'exemple non limitatif et en référence aux dessins annexés dans lesquels :
- la figure 1 est une vue schématique en perspective d'une aube de rotor d'une turbine de turbomachine ;
- la figure 2 est une vue schématique en perspective du pied d'une aube de rotor, sur une surface duquel est fixée une plaquette ;
- la figure 3 est une vue schématique en perspective du pied d'une aube de rotor, sur une surface duquel sont fixées des pastilles ;
- la figure 4 est une vue schématique en perspective d'un outillage selon l'invention pour la prise de deux aubes de rotor ;
- la figure 5 est une autre vue schématique en perspective de l'outillage de la figure 4, sans les aubes de rotor ;
- la figure 6 est une vue schématique en perspective et à plus grande échelle d'une partie de l'outillage de la figure 4, et représente les moyens de positionnement et d'immobilisation des éléments à fixer sur les pieds des aubes ;
- les figures 7 et 8 sont des vues schématiques en perspectives de gabarits de l'outillage selon l'invention ;
- la figure 9 est une vue schématique en perspective de moyens d'appui de l'outillage selon l'invention ; et
- la figure 10 est une vue schématique en perspective d'une vis de fixation des moyens d'appui de la figure 9.

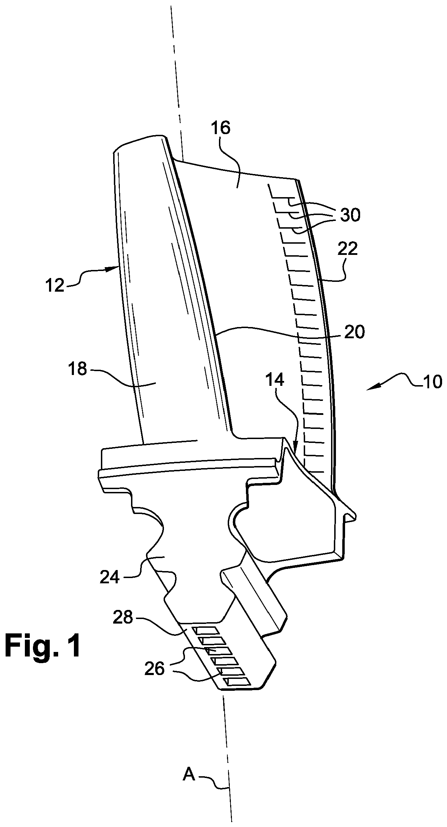

On se réfère d'abord à la figure 1, qui représente une aube 10 de rotor d'une turbine à gaz, en particulier d'une turbomachine telle qu'un turboréacteur ou un turbopropulseur d'avion.

Cette aube 10 comprend une pale 12 rattachée à une plate-forme 14 et comportant un extrados 16 ou surface extérieure convexe et un intrados 18 ou surface intérieure concave qui sont reliés à leurs extrémités amont par un bord 20 d'attaque et à leurs extrémités aval par un bord 22 de fuite.

La pale 12 de l'aube est raccordée par la plate-forme 14 sensiblement rectangulaire à un pied 24, qui est du type en sapin dans l'exemple représenté, au moyen duquel l'aube 10 est montée sur un disque (non représenté) du rotor de la turbine, par emmanchement de ce pied 24 dans une rainure de forme complémentaire de la périphérie du disque de rotor.

L'aube 10 est ventilée intérieurement et refroidie au moyen d'une cavité ou de canaux internes de circulation d'air, qui s'étendent parallèlement à l'axe longitudinal A de l'aube 10 et qui sont alimentés par des ouvertures 26 débouchant sur une surface 28 plane d'extrémité du pied 24 de l'aube. Dans l'exemple représenté, la surface 28 du pied d'aube comprend six ouvertures 26 qui sont alignées les unes derrière les autres. Des fentes 30 de sortie d'air alimentées par les canaux internes sont formées sur une partie de l'intrados 16 proche du bord de fuite 22.

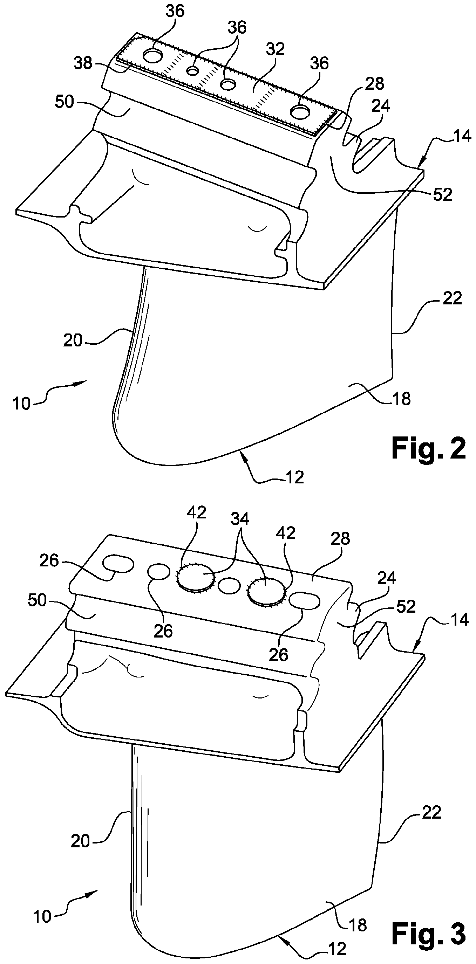

Au moins une plaquette 32 (figure 2) ou pastille 34 (figure 3) est fixée par brasage ou soudage sur la surface 28 précitée du pied d'aube, pour la calibration du débit d'air circulant dans les canaux internes de l'aube.

En figure 2, la plaquette 32 a une forme rectangulaire allongée et a une longueur et une largeur qui sont légèrement inférieures à celles de la surface 28 du pied d'aube de sorte que la plaquette recouvre la quasi-totalité de cette surface.

La plaquette 32 est réalisée en Hastelloy X et a par exemple une épaisseur de l'ordre de 0,5mm, une longueur de l'ordre de 28 mm et une largeur de l'ordre de 5mm.

La plaquette 32 comprend quatre orifices 36 qui sont chacun destinés à communiquer avec une des ouvertures 26 précitées de la surface 28 du pied d'aube. Les quatre orifices 36 de la plaquette 32 communiquent donc avec quatre ouvertures 26 de la surface 28 et les deux ouvertures 26 restantes de cette surface sont obturées par la plaquette 32. Les quatre orifices 36 de la plaquette ont des dimensions et des formes prédéterminées qui permettent de déterminer avec précision les débits d'air d'alimentation des canaux de l'aube.

En figure 3, deux pastilles 34 sont fixées sur la surface 28 du pied d'aube par soudage laser, chacune de ces pastilles recouvrant et obturant une des ouvertures 26 de la surface 28.

Chaque pastille 34 a une forme circulaire et un diamètre légèrement supérieur à celui des ouvertures 26 du pied d'aube. Chaque pastille 34 a par exemple un diamètre de l'ordre de 5,4mm et une épaisseur de l'ordre de 0,5mm.

Comme cela sera décrit dans ce qui suit, la plaquette 32 ou chaque pastille 34 est d'abord positionnée sur la surface 28 du pied d'aube puis immobilisée dans cette position par pointage laser. Pour cela, au moins un point de soudure est créé, par exemple par une impulsion laser, entre la plaquette 32 ou la pastille 34 et l'aube. Un cordon de soudure 38, 42 par soudage laser est ensuite réalisé sur tout le pourtour de la plaquette 32 ou de la pastille 34. En variante, la plaquette 32 et les pastilles 34 peuvent être fixées sur les pieds d'aubes par brasage.

L'invention concerne un outillage de prise d'au moins une aube de rotor 10 telle que décrite ci-dessus, pour la fixation d'une plaquette 32 ou de pastilles 34 sur la surface 28 de son pied 24.

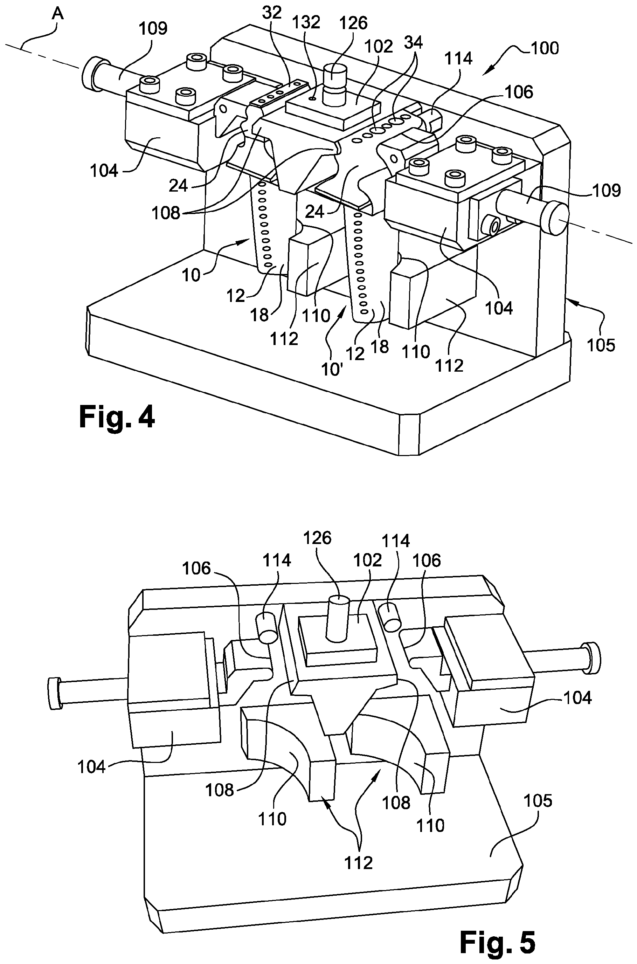

Dans l'exemple de réalisation représenté aux figures 4 à 9, l'outillage 100 permet de fixer simultanément deux aubes de rotor 10, 10' qui sont disposées à côté l'une de l'autre, une plaquette 32 étant destinée à être fixée sur le pied 24 de l'aube 10 et deux pastilles 34 étant destinées à être fixées sur le pied 24 de l'autre aube 10'.

L'outillage 100 comprend des premiers moyens 102, 104 de fixation et d'immobilisation des aubes de rotor 10, 10', qui sont portés par un support 105, et des seconds moyens 106, 107, 108 de positionnement et d'immobilisation de la plaquette 32 et des pastilles 34 sur les surfaces précitées des pieds d'aubes.

Le support 105 a une forme générale en L et comprend une première plaque horizontale inférieure destinée à être posée à plat sur le sol ou un établi, et une seconde plaque verticale qui s'étend vers le haut depuis la surface supérieure de la première plaque (figure 4).

Les deux aubes de rotor 10, 10' immobilisées par les premiers moyens de fixation 102, 104 peuvent être destinées à un même moteur ou, comme dans l'exemple représenté, être différentes et destinées à des moteurs distincts (par exemple une aube de rotor 10 pour un moteur du type MHP M88 et une aube de rotor 10' pour un moteur du type MHP TP400 ou SaM 146).

Les premiers moyens précités de l'outillage 100 comportent des mors formés par une partie centrale 102 fixée au support 105 et deux parties latérales 104 qui sont portées par le support 105 et qui sont mobiles en translation le long d'un même axe A, le long duquel sont alignées les parties 102, 104. Les parties centrale 102 et latérales 104 sont situées en avant de la seconde plaque verticale du support 105, et au-dessus de la première plaque horizontale de ce support.

Chaque partie latérale 104 comporte une mâchoire 106 qui est située en regard d'une mâchoire 108 de la partie centrale 102 et qui peut être rapprochée ou éloignée de cette mâchoire 108 par déplacement de la partie latérale 104 le long de l'axe A.

Les parties latérales 104 sont sollicitées vers la partie centrale 102 par l'intermédiaire de ressorts ou analogues. Ces parties latérales 104 sont solidaires de poignées 109 permettant de les écarter de la partie centrale 102 par traction sur ces poignées le long de l'axe A, du côté opposé à la partie centrale 102. Les parties latérales 104 peuvent être montées mobiles sur le support 105 par l'intermédiaire de glissières ou analogues (non représentées).

Chaque aube de rotor 10, 10' est montée dans l'outillage 100 de sorte que son pied 24 soit serré entre les mâchoires 106, 108 de la partie centrale 102 et d'une partie latérale 104. Ces mâchoires 106, 108 sont conformées pour épouser avec un faible jeu la forme des pieds d'aubes. Dans l'exemple représenté, les pieds d'aubes 24 sont du type en sapin et comportent sur leurs faces latérales des gorges (référencées 50 aux figures 2 et 3) qui s'étendent sur toute la dimension longitudinale du pied. Les mâchoires 106, 108 sont destinées à être engagées dans ces gorges 50, comme cela est visible en figure 4.

Dans la position de montage des aubes 10, 10' représentée en figure 4, la pale 12 de chaque aube s'étend en dessous des premiers moyens 102, 104 de l'outillage 100 et prend appui par son extrados 18 sur une surface 110 de forme complémentaire d'un bloc de positionnement 112 porté par le support 105.

La face radiale aval (référencée 52 aux figures 2 et 3) du pied 24 de chaque aube 10, 10' est destinée à venir en butée sur un plot 114 porté par le support 105, de façon à ce que le bord d'attaque 20 de l'aube soit situé vers l'avant de l'outillage 100, du coté de l'opérateur. Le plot 114 et le bloc 112 forment des moyens de détrompage destinés à renseigner l'opérateur lorsqu'une aube 10, 10' n'est pas correctement montée dans l'outillage. En effet, lorsque l'intrados d'une aube 10, 10' est situé du côté de la surface 110 d'un bloc 112, le bord d'attaque 20 de l'aube vient en butée sur cette surface et le pied d'aube ne peut pas venir en butée sur le plot 114 et reste donc écarté de ce plot, ce qui alerte l'opérateur.

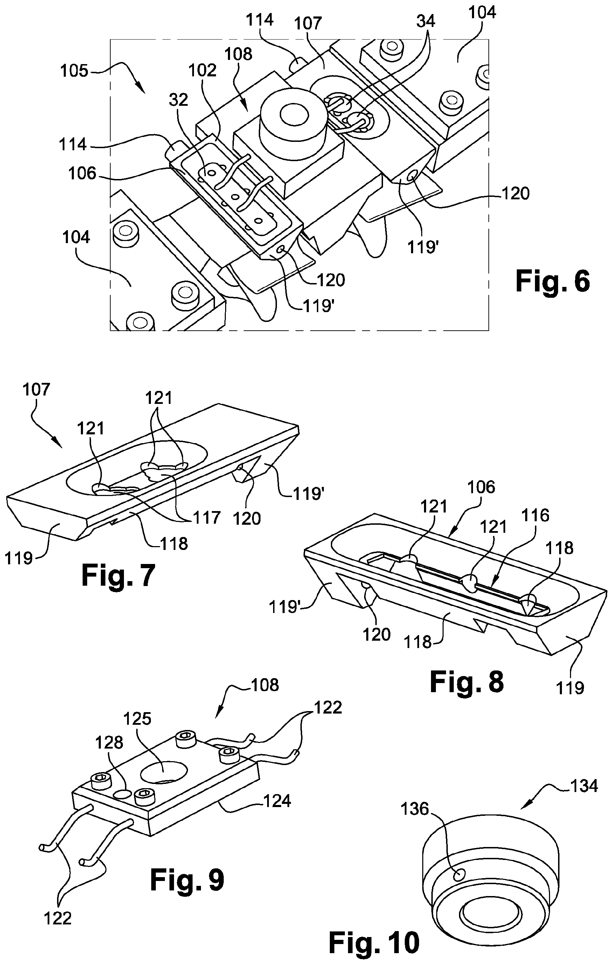

Les seconds moyens de l'outillage 100 selon l'invention comportent un gabarit 106, 107 pour positionner le ou les éléments à fixer sur la surface 28 du pied de chaque aube 10, 10', et des moyens 108 d'appui sur ces éléments pour les maintenir contre les surfaces 28 (figure 6).

Le gabarit 106 de la figure 8 est destiné à positionner une plaquette 32 du type précité sur la surface 28 du pied de l'aube 10. Le gabarit 107 de la figure 7 est lui destiné à positionner deux pastilles 34 du type précité sur la surface 28 du pied de l'aube 10'.

Le gabarit 106 a une forme sensiblement parallélépipédique et comporte en son centre une lumière traversante 116 dont la forme est similaire à celle de la plaquette 32, qui est parallélépipédique dans l'exemple représenté. Les dimensions de la lumière 116 sont sensiblement égales voire légèrement supérieures à celles de la plaquette 32. Le gabarit 107 de la figure 7 diffère de celui de la figure 8 en ce qu'il comprend deux lumières 117 ayant chacune une forme circulaire dont le diamètre est sensiblement égal voire légèrement supérieur à celui d'une pastille 34.

Chaque gabarit 106, 107 comprend des moyens d'emboîtement sur le pied d'une aube 10, 10', ces moyens d'emboîtement comportant des rebords périphériques 118, 119, 119' s'étendant vers le bas et destinés à coopérer avec des parties correspondantes du pied d'aube. Dans l'exemple représenté, chaque gabarit 106, 107 comprend des rebords périphériques latéraux 118 s'étendant le long des côtés de plus grande dimension du gabarit, et deux rebords périphériques d'extrémité 119, 119' s'étendant le long des côtés de plus petite dimension du gabarit. Les rebords d'extrémité 119, 119' de chaque gabarit sont destinés à venir en appui sur les faces radiales d'extrémité des pieds d'aubes 24.

L'un 119' des rebords d'extrémité de chaque gabarit 106, 107 a une hauteur supérieure à celle de l'autre rebord 119 et forme des moyens de détrompage destinés à renseigner l'opérateur sur un éventuel mauvais montage du gabarit. Dans la position correcte de montage représentée en figure 6, le rebord d'extrémité 119' de chaque gabarit 106, 107 est positionné sur l'avant de l'outillage 100, en face de l'opérateur. Dans le cas où un gabarit ne serait pas correctement monté sur le pied d'aube, un rebord 118 serait situé à l'arrière de l'outillage 100 et le plot 114 précité empêcherait le gabarit d'être correctement emboîté sur le pied d'aube.

Lorsque le gabarit 106, 107 est en position de montage, la lumière 116, 117 laisse libre la ou les zones de la surface 28 du pied d'aube sur lesquelles doivent être fixées la plaquette 32 ou les pastilles 34. La plaquette 32 et les pastilles 34 sont destinées à être engagées dans les lumières 116, 117 des gabarits 106, 107 et à reposer à plat sur les surfaces 28 des pieds d'aubes (figure 6).

Le bord périphérique de la lumière 116, 117 de chaque gabarit 106, 107 comporte des encoches 121 traversantes qui définissent des espaces entre le gabarit et chaque élément à fixer (figures 6 à 8). Un faisceau laser est destiné à passer à travers chacun de ces espaces pour le pointage de l'élément sur la surface du pied d'aube.

Les encoches 121 sont par exemple au nombre de trois, quatre, six, voire plus, par lumière 116, 117 et ont une forme en demi cercle dans l'exemple représenté. Ces encoches 121 sont espacées les unes des autres et régulièrement réparties.

Les moyens d'appui 108 de l'outillage 100 selon l'invention sont représentés aux figures 6 et 9 et comportent des doigts 122 élastiquement déformables qui sont fixés à un organe 124 par une de leurs extrémités, les autres extrémités de ces doigts prenant appui sur la plaquette 32 et les pastilles 34 pour les maintenir contre les surfaces 28 des pieds d'aubes.

Dans l'exemple représenté, la plaquette 32 est maintenue en appui sur le pied de l'aube 10 par l'intermédiaire de deux doigts 122 et chaque pastille 34 est maintenue en appui sur le pied de l'aube 10' par l'intermédiaire d'un doigt 122 (figure 6). Les doigts 122 de maintien de la plaquette 32 et des pastilles 34 sont solidaires de l'organe 124 commun, qui est fixé de manière amovible sur la partie centrale 102 des premiers moyens précités.

L'organe 124 a une forme parallélépipédique, les deux doigts 122 de maintien de la plaquette 32 étant fixés à un côté de l'organe et les deux doigts de maintien des pastilles 34 étant fixées à un côté opposé de l'organe. Chaque doigt 122 est incurvé et a une forme sensiblement en S (figures 6 et 8).

L'organe 124 comprend sensiblement en son centre une ouverture 125 d'engagement sur une tige 126 filetée qui est solidaire de la partie centrale 102 des premiers moyens de l'outillage 100 et qui s'étend vers le haut (figures 4 et 5). L'organe 124 est engagé sur cette tige 126 de façon à ce que les doigts 122 soient orientés du côté des parties latérales 104 des premiers moyens de l'outillage. Les positions et l'écartement des doigts 122 portés par l'organe 124 sont prédéterminés en fonction du type d'aube et du type d'élément à fixer sur le pied de chaque aube. Pour éviter un mauvais montage de ces doigts 122, l'organe 124 peut comprendre des moyens de détrompage destinés à coopérer avec des moyens complémentaires de la partie centrale 102 de l'outillage.

L'organe 124 peut en outre comprendre un repère visuel, tel qu'un orifice 128, à côté de l'ouverture 125 précitée, et destiné à être aligné avec un repère visuel, tel qu'un orifice 132, de la partie centrale 102 (figures 4 et 9).

L'organe 124 est maintenu contre la partie centrale 102 de l'outillage 100 au moyen d'un écrou 134 à filetage interne qui est vissé sur l'extrémité libre de la tige 126 portée par la partie centrale 102, jusqu'à ce qu'il prenne appui sur l'organe (figure 10).

L'écrou 134 est de préférence du type à vissage sur un quart de tour, c'est-à-dire qu'il suffit de le visser sur la tige 126 en le tournant de 90° autour de son axe pour assurer le serrage de l'organe 124 sur la partie centrale 102. Avantageusement, l'écrou 134 comprend un repère visuel, tel qu'un trou 136, destiné à être situé du côté du repère 128 de l'organe 124, lorsque l'écrou est correctement vissé sur la tige 126 (figures 9 et 10).

L'outillage 100 selon l'invention peut être utilisé de la façon suivante : les mâchoires 106, 108 de l'outillage sont écartées les unes des autres en éloignant les parties latérales 104 de la partie centrale 102. Deux aubes 10, 10' sont montées dans l'outillage 100 de façon à ce que leurs extrados 18 soient en appui sur les surfaces 110 des blocs 112 et que leurs pieds prennent appui sur les plots 114 du support 105, comme représenté en figure 4. Les parties latérales 104 sont relâchées de façon à ce que leurs mâchoires 106 viennent en appui sur les pieds d'aubes et les maintiennent serrés contre les mâchoires 108 de la partie centrale 104. Les gabarits 106, 107 sont montés sur les pieds d'aubes de façon à ce que leurs rebords 119' soient situés du même côté, à l'avant de l'outillage. Une plaquette 32 est insérée dans la lumière 116 du premier gabarit 106 et une pastille 34 est engagée dans chaque lumière 117 du second gabarit 107. L'organe 124 de support des doigts 122 est monté sur la partie centrale 102 en engageant la tige 126 de la partie centrale 102 dans l'ouverture 125 de l'organe 124 et en alignant les orifices 128 et 132 de l'organe et de la partie centrale, respectivement. L'écrou 134 est vissé sur la tige 126 jusqu'à ce que son trou 136 soit situé du côté de l'orifice 128 de l'organe 124. Dans cette position, les doigts 122 prennent appui par leurs extrémités libres sur la plaquette 32 et les pastilles 34 pour les maintenir contre les pieds d'aubes.

La plaquette 32 et les pastilles 34 sont immobilisées sur les surfaces des pieds d'aubes par pointage laser, le faisceau laser étant destiné à passer dans les encoches 121, comme cela est décrit dans ce qui précède. Un point de soudure est créé par impulsion laser à travers chaque encoche 120, entre la plaquette 32 ou la pastille 34 et la surface du pied d'aube. Après que ces points de soudure aient été réalisés à travers toutes les encoches 120 précitées, l'écrou 134 est dévissé et l'organe 124 et les gabarits 106, 107 sont retirés de l'outillage 100. Un cordon de soudure 38, 42 par soudage laser ou un cordon de brasure est ensuite réalisé sur tout le pourtour de la plaquette 32 et de chaque pastille 34 (figures 2 et 3), avec une très bonne répétabilité d'une pièce à l'autre.

Bien entendu, l'outillage selon l'invention peut être destiné à recevoir plusieurs pièces, différentes ou identiques, à la fois, le nombre de ces pièces pouvant être de deux, trois ou davantage.

## Revendications

1. Outillage (100) de prise de pièce (10, 10') de turbomachine, pour la fixation d'un élément métallique (32, 34) sur la pièce, comprenant des premiers moyens (102, 104) de fixation et d'immobilisation de la pièce et des seconds moyens de positionnement et d'immobilisation de l'élément sur une surface de la pièce, **caractérisé en ce que** lesdits seconds moyens sont amovibles et comprennent un gabarit (106, 107) destiné à être monté sur une partie de la pièce et comportant une lumière (116, 117) de réception de l'élément, au moins une partie du bord périphérique de la lumière du gabarit coopérant avec l'élément pour son positionnement sur la surface de la pièce, ce bord périphérique comportant au moins une encoche (121) de passage d'un moyen de fixation par pointage de l'élément sur la surface, lesdits seconds moyens comprenant également des moyens (108) d'appui sur l'élément (32, 34) pour le maintenir contre la surface de la pièce, les moyens d'appui (108) comprenant des lames ou des doigts (122) élastiquement déformables dont une extrémité est en appui sur l'élément (32, 34) et dont l'autre extrémité est montée et fixée sur lesdits premiers moyens (102), le gabarit (106, 107) comporte des moyens (118, 119, 119') formant butée destinés à coopérer avec la pièce pour immobiliser le gabarit sur la pièce, et/ou des moyens (119') de détrompage destinés à empêcher un mauvais montage du gabarit sur la pièce.

2. Outillage selon la revendication 1, **caractérisé en ce que** le bord périphérique de la lumière (116, 117) du gabarit (106, 107) comprend au moins trois encoches (121) espacées les unes des autres, ayant par exemple chacune une forme en demi-cercle.

3. Outillage selon la revendication 1 ou 2, **caractérisé en ce que** la lumière (116, 117) du gabarit (106, 107) comprend une forme et des dimensions similaires à celles de l'élément (32, 34).

4. Outillage selon l'une des revendications précédentes, **caractérisé en ce que** le gabarit (107) comporte deux lumières (117) destinées à recevoir chacune un élément métallique (34) à fixer sur la surface de la pièce.

5. Outillage selon l'une des revendications précédentes, **caractérisé en ce que** la pièce est une aube de rotor (10, 10') de turbine.

6. Outillage selon l'une des revendications précédentes, **caractérisé en ce que** lesdits premiers moyens permettent de fixer et d'immobiliser simultanément au moins deux pièces (10, 10') de même type, et comportent des mors comportant une partie centrale (102) fixe et des parties latérales (104) mobiles en translation par rapport à la partie centrale, chaque pièce étant destinée à être montée entre une mâchoire (108) de la partie fixe et une mâchoire (106) de l'une des parties latérales.

7. Outillage selon la revendication 6, **caractérisé en ce que** les moyens d'appui (122) sur un élément (32) destiné à être fixé sur l'une des pièces (10) et les moyens d'appui (122) sur un élément (34) destiné à être fixé sur une autre pièce (10'), sont solidaires d'un organe (124) commun fixé de manière amovible sur la partie centrale (102) desdits premiers moyens.

8. Procédé de fixation d'un élément métallique (32, 34) sur une pièce (10, 10') de turbomachine, au moyen de l'outillage (100) de prise de pièce selon l'une des revendications précédentes, **caractérisé en ce qu'**il comprend les étapes consistant à :
- immobiliser au moins une pièce grâce aux premiers moyens (102, 104),
- monter le gabarit (106, 107) sur la pièce et engager l'élément dans la lumière (116, 117) du gabarit pour le positionner sur la surface de la pièce,
- maintenir l'élément en appui sur la pièce grâce aux moyens d'appui (108),
- fixer l'élément sur la surface de la pièce par pointage laser sur ses bords périphériques, à travers les encoches (121) précitées du gabarit,
- retirer les moyens d'appui et le gabarit, et
- former un cordon (38, 42) de soudure ou de brasure sur tout le pourtour de l'élément.

## Patentansprüche

1. Werkzeug (100) zum Ergreifen eines Turbotriebwerkbauteils (10, 10') für das Befestigen eines Metallelements (32, 34) an das Bauteil, enthaltend erste Mittel (102, 104) zum Befestigen und Festlegen des Bauteils und zweite Mittel zum Positionieren und Festlegen des Elements an einer Fläche des Bauteils, **dadurch gekennzeichnet, dass** die zweiten Mittel abnehmbar sind und eine Schablone (106, 107) aufweisen, die dazu bestimmt ist, an einen Abschnitt des Bauteils angebracht zu werden und eine Öffnung (116, 117) zum Aufnehmen des Elements aufweist, wobei zumindest ein Abschnitt des Umfangsrandes der Öffnung der Schablone mit dem Element zu dessen Positionierung an der Fläche des Bauteils zusammenwirkt, wobei dieser Umfangsrand zumindest eine Einkerbung (121) zum Durchtritt eines Befestigungsmittels Schweisspunkten des Elements an der Fläche aufweist, wobei die zweiten Mittel auch Abstützmittel (108) zum Abstützen am Element (32, 34) enthalten, um dieses an der Fläche des Bauteils zu halten, wobei die Abstützmittel (108) elastisch verformbare Klinge bzw. Finger (122) aufweisen, von denen ein Ende sich an dem Element (32, 34) abstützt und das andere Ende an den ersten Mitteln (102) angebracht und befestigt ist, wobei die Schablone (106, 107) Mittel (118, 119, 119') enthält, die einen Anschlag bilden und dazu bestimmt sind, mit dem Bauteil zusammenzuwirken, um die Schablone am Bauteil festzulegen, und/oder Verwechselungsschutzmittel (119'), die dazu bestimmt sind, eine falsche Anbringung der Schablone am Bauteil zu verhindern.

2. Werkzeug nach Anspruch 1, **dadurch gekennzeichnet, dass** der Umfangsrand der Öffnung (116, 117) der Schablone (106, 107) zumindest drei Einkerbungen (121) enthält, die von einander bestandet sind und jeweils beispielsweise eine Halbkreisform haben.

3. Werkzeug nach Anspruch 1 oder 2, **dadurch gekennzeichnet, dass** die Öffnung (116, 117) der Schablone (106, 107) eine Form und Abmessungen ähnlich wie das Element (32, 34) aufweist.

4. Werkzeug nach einem der vorangehenden Ansprüche, **dadurch gekennzeichnet, dass** die Schablone (107) zwei Öffnungen (117) aufweist, die dazu bestimmt sind, jeweils ein Metallelement (34) aufzunehmen, das an die Fläche des Bauteils zu befestigen ist.

5. Werkzeug nach einem der vorangehenden Ansprüche, **dadurch gekennzeichnet, dass** das Bauteil eine Turbinenrotorschaufel (10, 10') ist.

6. Werkzeug nach einem der vorangehenden Ansprüche, **dadurch gekennzeichnet, dass** die ersten Mittel gestatten, gleichzeitig zumindest zwei Bauteile (10, 10') gleicher Art zu befestigen und festzulegen, und Backenelemente aufweisen, die einen festen Mittelabschnitt (102) und zum Mittelabschnitt translatorisch verschiebbare Seitenabschnitte (104) umfassen, wobei jedes Bauteil dazu bestimmt ist, zwischen einer Backe (108) des festen Abschnitts und einer Backe (106) eines der Seitenabschnitte angebracht zu werden.

7. Werkzeug nach Anspruch 6, **dadurch gekennzeichnet, dass** die Abstützmittel (122) zum Abstützen an einem Element (32), das dazu bestimmt ist, an einem der Bauteile (10) befestigt zu werden, und die Abstützmittel (122) zum Abstützen an einem Element (34), das dazu bestimmt ist, an einem weiteren Bauteil (10') befestigt zu werden, fest mit einem gemeinsamen Organ (124) verbunden sind, das abnehmbar an dem Mittelabschnitt (102) der ersten Mittel befestigt ist.

8. Verfahren zum Befestigen eines Metallelements (32, 34) an einem Turbotriebwerkbauteil (10, 10') mittels eines Werkzeugs (100) zum Ergreifen des Bauteils nach einem der vorangehenden Ansprüche, **dadurch gekennzeichnet, dass** es folgende Schritte umfasst:
- Festlegen zumindest eines Bauteils mit Hilfe der ersten Mittel (102, 104),
- Anbringen der Schablone (106, 107) an dem Bauteil und Einführen des Elements in die Öffnung (116, 117) der Schablone, um sie an der Fläche des Bauteils zu positionieren,
- Halten des Elements in Abstützung an dem Bauteil mit Hilfe der Abstützmittel (108),
- Befestigen des Elements an der Fläche des Bauteils durch Schweisspunkten mittels Lasers an seinen Umfangsrändern durch die Einkerbungen (121) der Schablone hindurch,
- Entfernen von Abstützmitteln und Schablone, und
- Ausbilden einer Schweiß- bzw. Lötnaht (38, 42) über den gesamten Umfang des Elements.

## Claims

1. Tooling (100) for holding a turbine engine part (10, 10') in order to fasten a metal element (32, 34) to the part, the tooling having first means (102, 104) for fastening to the part and for holding it stationary, and second means for positioning the element on the surface of the part and for holding it stationary, the tooling being **characterized in that** said second means are removable and comprise a jig (106, 107) for mounting on a portion of the part and including an opening (116, 117) for receiving the element, at least a portion of the peripheral edge of the opening in the jig co-operating with the element in order to position it on the surface of the part, said peripheral edge including at least one notch (121) for passing therethrough means for fastening the element on the surface by tacking, said second means also including means (108) for support against the element (32, 34) in order to hold it against the surface of the part, the support means (108) comprise elastically deformable blades or fingers (122), each having one end pressing against the element (32, 34) and an opposite end mounted on and fastened to said first means (102), the jig (106, 107) has abutment-forming means (118, 119, 119') for co-operating with the part to hold the jig stationary on the part, and/or keying means (119') for preventing the jig being wrongly mounted on the part.

2. Tooling according to claim 1, **characterized in that** the peripheral edge of the opening (116, 117) in the jig (106, 107) includes at least three mutually spaced-apart notches (121), e.g. each being in the form of a semicircle.

3. Tooling according to claim 1 or claim 2, **characterized in that** the opening (116, 117) in the jig (106, 107) presents a shape and dimensions that are similar to the shapes and dimensions of the element (32, 34).

4. Tooling according to any preceding claim, **characterized in that** the jig (107) has two openings (117) for receiving respective metal elements (34) for fastening on the surface of the part.

5. Tooling according to any preceding claim, **characterized in that** the part is a turbine rotor blade (10, 10').

6. Tooling according to any preceding claim, **characterized in that** said first means enable at least two parts (10, 10') of the same type to be fastened and held stationary simultaneously, and comprise jaws comprising a stationary central portion (102) and lateral portions (104) that are movable in translation relative to the central portion, each part being for mounting between a jaw (108) of the stationary portion and a jaw (106) of one of the lateral portions.

7. Tooling according to claim 8, **characterized in that** the support means (122) against an element (32) for fastening on one of the parts (10) and the presser means (122) for support against an element (34) for fastening on another part (10') are secured to a common member (124) removably fastened on the central portion (102) of said first means.

8. A method of fastening a metal element (32, 34) on a turbine engine part (10, 10') by means of the part-holding tooling (100) according to any preceding claim, the method being **characterized in that** it comprises the steps consisting in:
• holding at least one part stationary by using the first means (102, 104);
• mounting the jig (106, 107) on the part and engaging the element in the opening (116, 117) of the jig in order to position the element on the surface of the part;
• holding the element pressed against the part by using the support means (108);
• fastening the element on the surface of the part by laser tacking on its peripheral edges through the above-mentioned notches (121) of the jig;
• withdrawing the support means and the jig; and
• forming a bead (38, 42) of welding or brazing around the entire perimeter of the element.
